(19) Europäisches Patentamt
European Patent Office
Office européen des brevets

(11) **EP 4 749 551 A1**

(12) **EUROPEAN PATENT APPLICATION**

(43) Date of publication:
**27.05.2026 Bulletin 2026/22**

(21) Application number: **24214519.1**

(22) Date of filing: **21.11.2024**

(51) International Patent Classification (IPC):
*G06Q 20/06* (2012.01)

(52) Cooperative Patent Classification (CPC):
**G06Q 20/065; H04L 9/50;** H04L 2209/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **MASTERCARD ASIA/PACIFIC PTE. LTD.**
**Singapore (189352) (SG)**

(72) Inventors:
• **HUANG, Donghao**
**Singapore (SG)**
• **GUNAWAN, Dendy**
**Singapore (SG)**
• **NG, Gerald**
**Singapore (SG)**
• **MALEKI, Mehrdad**
**Maynooth (IE)**
• **CHEW, Shi Ler Shila**
**Singapore (SG)**

(74) Representative: **Murgitroyd & Company**
**165-169 Scotland Street**
**Glasgow G5 8PL (GB)**

(54) **ENABLING USE OF A QUANTUM CURRENCY IN TRANSACTIONS**

(57) A system 200 for enabling use of a quantum currency comprises: a quantum currency generator 100a, a user device 100b and a merchant device 100c. The quantum generator 100a is configured to receive from the user device 100b an instruction which corresponds to a request for an amount of a quantum currency, generate a quantum currency state that is representative of the amount of a quantum currency, generate a serial number that corresponds to the quantum currency state and send the quantum currency state and the serial number to the user device such that the quantum currency state and the serial number can be stored in memory of the user device. The quantum currency state is generated using a private key and a public key. The quantum currency generator 100a is configured to publish the public key. The quantum currency state can be verified as being legitimate using the public key.

Figure 2

**Description**

**FIELD OF THE INVENTION**

The present disclosure relates to a quantum currency. The present disclosure more particularly relates to methods, systems and tools for enabling use of a quantum currency in transactions, such as offline transactions. The present disclosure may find particular use in allowing a quantum currency to be used when executing a smart contract.

**BACKGROUND TO THE INVENTION**

Historically, money has evolved throughout the centuries, all the way from barter trading to cryptocurrencies. Such developments have improved accessibility and ease of use without compromising the authenticity of money. In modern currency systems, ease of use is among the most important considerations to enable widespread adoption.

Traditional currency systems typically rely on physical objects having a predetermined value to enable transactions. For example, transactions may involve the exchange of coins and/or notes corresponding to a predetermined amount of a currency for particular goods and/or services. A well-known drawback of such traditional currency systems is that they are susceptible to forgeries, that is, the coins and notes on which the system relies may be accurately copied by illegitimate entities. While security features such as serial numbers or watermarks may be used to increase the complexity of producing forgeries, it may be impractical to verify the authenticity of such security features during the short time that a transaction takes place. Furthermore, once realistic forgeries are in circulation it is difficult to identify and/or destroy them.

Digital technologies have helped to transform traditional currency systems into the modern currency systems in wide use today. Modern digital currencies typically rely on advanced cryptographic techniques and the secure transfer of information between the parties to a transaction. In an example, a user may possess a credit or debit card and is in possession of a user secret (e.g. a PIN). Initially, the user provides the credit or debit card and the secret to a merchant. The merchant then sends a request to a central authority, such as a bank, asking the central authority to transfer funds from an account associated with the user to an account associate with the merchant. The request includes information derived from the credit or debit card and the user secret. If the central authority verifies that the information received from the merchant is authentic, then the central bank fulfils the request of the merchant.

While modern digital currency systems do provide an increased level of security and verification not available in traditional systems, digital currency systems are still susceptible to forgery, for example if the information contained in the credit card is cloned or copied, and/or if the user secret PIN is stolen or successfully inferred. Furthermore, the security of such digital currency systems is reliant on cryptographic protocols, such as RSA. While such protocols are thought of as being classically secure, they are not 'quantum safe' i.e. they are susceptible to 'brute force' attacks or Shor's Algorithm attacks from quantum computers. As such, the recent rise of more powerful quantum computers poses a potential threat to the security of modern digital currency systems.

Cryptocurrencies provide further examples of modern digital currencies. Transactions using cryptocurrencies typically involve the use of wallets which hold private and public keys and allow users to send, store and receive cryptocurrencies. While cryptocurrency wallets can effectively be used to pay for goods and/or services, the resulting transactions will be recorded on a public ledger or blockchain, reducing privacy. Furthermore, cryptocurrency transactions often rely on maintaining suitable data connections to e.g. a central authority which manages the ledger or blockchain. As such, private offline or off-chain transactions may not be possible when using cryptocurrencies.

The present disclosure has been devised to mitigate or overcome at least some of the above-mentioned problems.

**SUMMARY OF THE DISCLOSURE**

In accordance with an aspect of the present disclosure, there is provided a method for enabling use of a quantum currency in transactions, the method comprising: receiving an instruction from a user device, wherein the instruction corresponds to a request for an amount of a quantum currency; generating a quantum currency state, wherein the quantum currency state is a quantum state that is representative of the amount of a quantum currency and wherein the quantum currency state is generated using a private key and a public key; generating a serial number, wherein the serial number corresponds to the quantum currency state; sending the quantum currency state and the serial number to a user device such that the quantum currency state and the serial number can be stored in memory of the user device; and publishing the public key, wherein the quantum currency state can be verified using the public key. Advantageously, the method for generating a quantum currency provides a quantum currency state which can be transferred between parties and verified as being legitimate.

In some embodiments, the method further comprises: creating a public key and a private key, wherein the public key comprises a number *n,* a divisor *m* and/or a subgroup *H* of order *m,* and wherein the private key comprises a group *G* and/or an action $\phi$, wherein *H* is a subgroup of *G* and wherein *m* is a random divisor of *n*. Advantageously, by the no-cloning theorem, a counterfeiter cannot reproduce the currency state without knowledge of the private key, making the quantum currency secure.

In some embodiments, publishing the public key comprises: storing the public key in a ledger. Advantageously, publishing the public key while keeping the private key secret means that a counterfeiter cannot reproduce a verifiable currency state.

In some embodiments, generating the quantum currency state comprises: generating an initial quantum state.

In some embodiments, generating the quantum currency state comprises: generating an intermediate quantum state.

In some embodiments, generating the quantum currency state comprises: generating the quantum currency state by measuring and collapsing the intermediate quantum state.

In some embodiments, generating the intermediate quantum state comprises: applying the serial number to the initial quantum state to generate the intermediate quantum state.

In some embodiments, the method further comprises: storing a representation of the generated quantum currency state in a ledger.

In accordance with another aspect of the present disclosure, there is provided a method for enabling use of a quantum currency in transactions, the method comprising: receiving, by a merchant device, a quantum currency state and a serial number from a user device; storing the quantum currency state and the serial number; obtaining a public key; and performing a verification of the quantum currency state, wherein performing a verification of the quantum currency state calculating a verification result using the quantum currency state and the public key, and wherein the verification result indicates whether the quantum currency state corresponds to a legitimate quantum state generated by a quantum currency generator. Advantageously, the quantum currency state can be verified without being destroyed.

In some embodiments, calculating the verification result comprises: performing a Quantum Fourier Transform, QFT, on the quantum currency state.

In some embodiments, calculating the verification result comprises: generating a verification result based on a comparison of the QFT with the public key.

In some embodiments, the method further comprises: sending a confirmation to the user device.

In some embodiments, the method further comprises: in response to the verification result indicating that the quantum currency state corresponds to a legitimate quantum state generated by the quantum currency generator, sending a confirmation to the user device.

In some embodiments, the method further comprises: performing an action.

In some embodiments, the method further comprises: in response to the verification result indicating that the quantum currency state does not correspond to a legitimate quantum state generated by the quantum currency generator, performing an action.

In some embodiments, performing an action comprises: destroying or erasing the quantum currency state from the user device and/or merchant device.

In some embodiments, destroying or erasing the quantum currency state from the user device and/or merchant device comprises collapsing the quantum currency state.

In some embodiments, the memory of the user device comprises a physical system.

In some embodiments, the physical system comprises a plurality of qubits.

In some embodiments, collapsing the quantum currency state comprises: causing each qubit of the plurality of qubits to be in a ground state.

In accordance with another aspect of the present disclosure, there is provided a system for enabling use of a quantum currency in transactions, the system comprising: a quantum currency generator; a user device comprising a memory configured to store a quantum currency state; and a merchant device comprising a memory configured to store a quantum currency state. Advantageously, the system allows a quantum currency to be used in transactions.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

One or more embodiments of the disclosure will now be described, by way of example only, with reference to the accompanying drawings, in which:

Figure 1 shows an example computer system for implementing aspects of the present invention;

Figure 2 shows a network environment for implementing aspects of the present invention;

Figure 3 shows a method for enabling use of a quantum currency in transactions in accordance with an aspect of the present invention;

Figure 4 shows a further method for enabling use of a quantum currency in transactions in accordance with an aspect of the present invention;

Figure 5 shows a further method for enabling use of a quantum currency in transactions in accordance with an aspect of the present invention;

Figure 6 shows a further method for enabling use of a quantum currency in transactions in accordance with an aspect of the present invention;

Figure 7 shows a further method for enabling use of a quantum currency in transactions in accordance with an aspect of the present invention;

Figure 8 shows a further method for enabling use of a quantum currency in transactions in accordance with an aspect of the present invention;

Figure 9 shows a function for implementing aspects of the present invention;

Figure 10 shows a histogram according to an example;

Figure 11 shows a histogram according to an example; and

Figure 12 shows a histogram according to an example.

Note that the drawings are schematic and accompany the description, illustrating preferred and exemplary embodiments and not necessarily being drawn to scale.

**DETAILED DESCRIPTION**

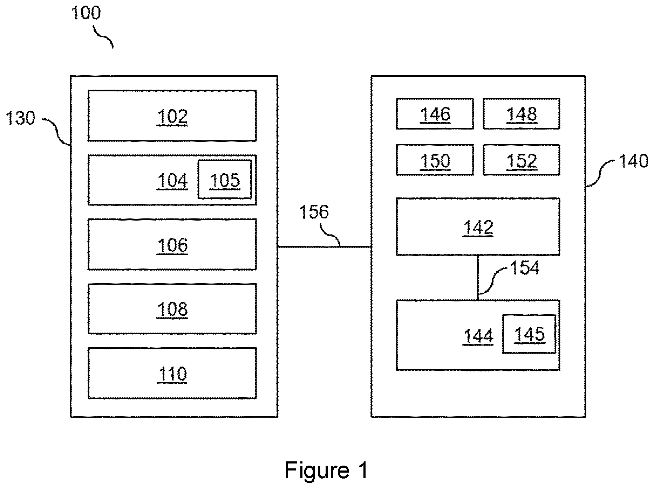

Figure 1 shows an example computing system 100 for implementing the present invention. One or more such computer systems 100 are arranged to perform or execute one or more steps of the methods described herein. In particular, software running on one or more computer systems 100 perform one or more steps of the methods described herein.

The computing system 100 comprises a classical computer 130 coupled to a quantum computer 140 via an interface 156.

The classical computer 130 comprises a processing element 102, a memory unit 104, an input/output (I/O) interface 106, a communications interface 108, and a bus 110. Whilst Figure 1 illustrates a classical computer 130 having particular components and in a particular arrangement, it can be envisaged that the classical computer 130 comprises any suitable number of components in any suitable arrangement of components. The classical computer 130 may further comprise additional classical computing elements as known in the art.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g., one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units. The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory. The one or more secondary memory units comprise memory, i.e., computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory. The memory stores software comprising a respective instance of at least one client application arranged to run on the processing element 102 for carrying out various steps of the methods disclosed herein. The client application may be initially provided to the classical computer 130 on suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the classical computer 130 and one or more computer devices arranged to facilitate communication between a user and the classical computer 130. For example, the one or more computer devices may include, but is not limited to including, a display device, a keyboard, a speaker, a printer, any other suitable device, or any combination of devices thereof.

The communication interface 108 facilitates communication between the classical computer 130 and any other one or more computer systems and/or one or more networks. The communication interface 108 may comprise a network interface controller, network adapter, wireless NIC, or wireless adapter for communicating with a network.

The quantum computer 140 comprises a quantum computing unit 142 and a quantum memory unit 144, a plurality of coupling devices 146, a bias device 148, and a state determination device 150. The quantum computing unit 142 and/or quantum memory unit 144 comprises a number N of qubits 152. The qubits 152 may be for example, superconducting flux devices 152 having a circulating current. For example, the superconducting flux devices 152 may comprise a loop of superconducting material interrupted by at least one Josephson junction, as is known in the art. Further qubit implementations may be envisaged. The quantum computing unit 142 is configured to provide data to, and receive data from, the quantum memory unit 144 by means of a memory interface 154. A "state" of the quantum computing unit 142 corresponds to the respective state of all of the N qubits 152. An example state of a qubit is a 0 state. The 0 state may correspond to, for example, a clockwise current around the superconducting flux devices 152 which may induce a downward magnetic field. A counterclockwise current around the superconducting flux devices may induce an upwards magnetic field which references a state 1. The state of the quantum computing unit 142 may be described by a bit string having a length N. Thus, there are $2^N$ possible configurations for the state of the quantum computing unit 142. The quantum computer 140 is preferably suitable for implementing quantum circuits. Other quantum computing models may be envisaged.

Example network environment and implementation

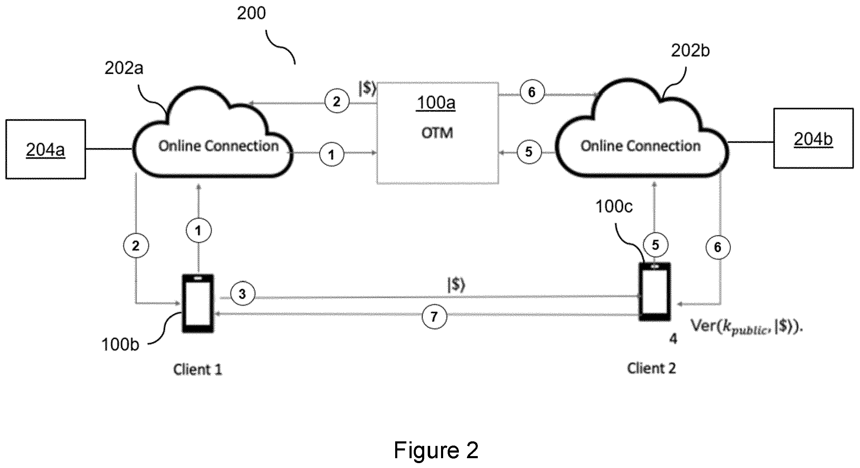

Figure 2 shows an example network environment 200 for facilitating implementation of the present invention.

The network environment 200 includes a plurality of computing systems 100a-c, each computing system 100 comprising a classical computer 130 coupled to a quantum computer 140 via an interface 156 in the manner described above with respect to figure 1. In examples, the system 200 comprises: a quantum currency generator 100a, a user device 100b and a merchant device 100c. The network environment 200 may include more computing systems 100 than those shown in figure 2.

In examples, computing system 100a is an OTM or Bank which may be an issuer of quantum currency (i.e. 'OTM' in figure 2 corresponds to a quantum currency generator), computing system 100b is a client device associated with a particular user who wishes to use a quantum currency to pay for goods/services (i.e. 'Client 1' in figure 2 corresponds to a user device) and computing system 100c is a client device associated with another user who wishes to use a quantum currency to receive payment for goods/services (i.e. 'Client 2' in figure 2 corresponds to a merchant device) .

The network environment 200 further includes one or more third party computer systems 204a, 204b which may be classical computing systems or quantum computing systems. The third party computer systems 204a, 204b may represent a single third party computer system 204. The or each third party computing system 204 may be a network addressable computing system. The or each third party computing system 204 may generate, store, receive, and transmit data. Communication with the or each third party computing system 204 may comprise the use of one or more application programming interfaces (APIs). One or more third party computing systems 204 may be present, and each of the one or more third party computing systems 204 may be associated with a respective third party.

The classical computer 130 of any of the plurality of computing systems 100a-c, 204a, 204b may communicate with any network, such as a networks 202a, 202b via the respective communication interfaces 108. Networks 202a, 202b may represent parts of a single network 202. The or each network 202 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 202 may be envisaged. The network 202 can facilitate communication between respective classical computers 130 and one or more third party computer systems 204. It will be appreciated that respective classical computers 130 and the third party computer systems 204 may be connected to each other directly, such that the network 202 is not needed.

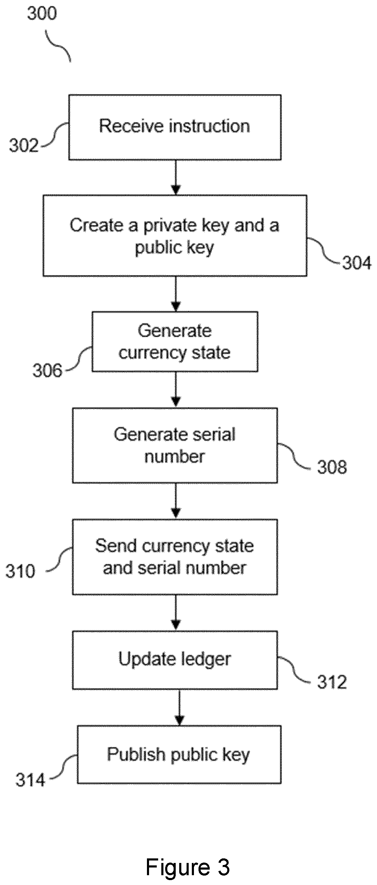

An example overall methodology for enabling use of a quantum currency in transactions, such as offline transactions, will now be explained with reference to the example network environment 200. Figures 3-8, discussed below, provide particular implementation details suitable for incorporation in certain parts of the overall methodology.

A public key quantum currency is a quantum currency that is generated by a Bank (in this case by OTM 100a) using a quantum polynomial time algorithm. The quantum currency can be verified by anybody holding the quantum currency state, without destroying the quantum state or making another copy of it.

The public-key quantum currency scheme disclosed herein relies on three fundamental components:

- KeyGen: An algorithm that on input generates a private key -public key pair.
- Bank (OTM): A quantum polynomial time algorithm that on an input, produces a quantum state which represents and amount of the quantum currency. The OTM will be the party that generates the funds, acknowledges the signatures and disburses the funds to the respective parties. The OTM can correspond to Financial Institutions (e.g. Banks) Government bodies or Fintech firms.
- Ver: A quantum polynomial time algorithm that on an input either accept or rejects. If a user holds the genuine quantum currency state and the public-key, they will be able to verify that the quantum currency state is legitimate and has been generated by the Bank (OTM).

As shown in figure 2, the example overall methodology for enabling use of a quantum currency in transactions, such as offline transactions, includes the following steps:

1. Client 1 sends classical currency via an online connection to the OTM. The OTM receives the classical currency while online.
2. OTM uses its private key and public key to generate a quantum state with a serial number that represents the amount of the classical currency. The OTM publicly announces the public key associated to each serial number. Client 1 receives the quantum currency from the OTM.
3. While offline, Client 1 sends the quantum currency state to Client 2 after receiving a request from Client 2. Client 1 also sends the public-key related to the quantum currency state to Client 2, or Client 2 can retrieve the public key from e.g. a ledger.
4. Client 2 can verify the quantum currency state using the public-key, i.e., Ver. Client 2 can verify the authenticity of the quantum currency while offline. The verifier measures the quantum currency state and if they observe some periodicity (with some period which depends on the serial number), then the money has been verified, otherwise Client 2 rejects.
5. After Client 2 has connected to the internet, Client 2 sends the quantum currency state via the online connection to the OTM.
6. Then, OTM sends the classical currency (with the same value that quantum currency state represents) via the online connection to Client 2.
7. After Client 2 receives the classical currency from the OTM, Client 2 may send a confirmation message to Client 1.

In the scheme shown in figure 2, a counterfeiter cannot make another copy of the quantum currency state due to the No-Cloning Theorem which states that it is impossible to make another copy of an unknown quantum state. On the other hand, if a counterfeiter tries to observe (measure) the quantum currency state, then the quantum currency state will not subsequently pass the verification test. Since every quantum currency state is unique, again by No-Cloning Theorem, not even Client 1 can make another copy of the same quantum state that would pass the same verification test. In the above scheme, we assume that there is only one issuer bank for issuing the quantum currency.

In the following table, we summarise the differences between quantum money, cryptocurrency and paper money:

Table 1: A summary of the differences between quantum and classical currencies

|  | CRYPTOCURRENCY | QUANTUM MONEY | CLASSICAL MONEY |
|---|---|---|---|
| P2P | ✓ | ✓ | ✓ |
| PHYSICAL FORM | x | ✓ | ✓ |

(continued)

|  | CRYPTOCURRENCY | QUANTUM MONEY | CLASSICAL MONEY |
|---|---|---|---|
| FIAT | x | ✓ | ✓ |
| SERIAL NUMBER | x | ✓ | ✓ |
| CRYPTOGRAPH | ✓ | ✓ | x |
| DUPLICATE TRANSACTION IDs | ✓ | x | - |
| DUPLICATE MONEY | ✓ | x | ✓ |

## Generating a quantum currency

Figure 3 shows a flow diagram of a method 300 for enabling use of a quantum currency in transactions, in accordance with an aspect of the present disclosure. In particular, the method 300 is a method for generating a quantum currency state that can be verified as legitimate. The method 300 may be carried out at a quantum currency generator, for example a central bank, OTM or other authority which issues currency, which may be implemented at a computing system such as the example computing system 100a shown in figure 2. The method 300 allows implementation of steps 1 and 2 of the overall methodology 200 explained above with reference to figure 2.

At step 302 the method 300 comprises receiving, by a quantum currency generator, an instruction from a user. The instruction corresponds to a request for an amount of a quantum currency. The user offers the quantum currency generator an amount of classical currency in exchange for a quantum currency. In examples, the quantum currency generator may be the computing system 100a shown in figure 2, and the instruction may be received via network 202. The classical currency may be any non-quantum currency, such as a traditional currency (represented in coins, notes or an online balance etc) or crypto currency (e.g. Bitcoin). In the example of a traditional currency, the quantum currency generator may receive a physical deposit of e.g. US dollars, or may receive a digital deposit of a currency from a user device associated with the user. In the example of a cryptocurrency, the quantum currency generator may receive e.g. a Bitcoin address from the user device associated with the user. In examples, the user device may be the computing system 100b shown in figure 2.

The classical currency received from the user (or user device) will correspond to an amount of the quantum currency, according to e.g. an exchange rate. Once the quantum currency generator has received the classical currency from the user (or user device), the quantum currency generator proceeds to generate the quantum currency for transmission to, and storage at, the user device. In this way, the quantum currency generator and user or user device exchange classical currency for quantum currency, enabling quantum currency transactions to be carried out by the user.

At step 304 the method 300 comprises creating, by the quantum currency generator, a public key $k_{public}$ and a private key $k_{private}$. As will be appreciated from the following description of the present scheme, both of the public key and the private key are needed to generate a currency state $|€\rangle$, but only the public key is needed to verify the authenticity of the currency state $|€\rangle$.

The quantum currency scheme used by the quantum currency generator is based on a Hidden Subgroup Problem in a specific non-Abelian group. Generating the public key $k_{public}$ and the private key $k_{private}$ at step 304 comprises generating a group $G$. We start by considering the non-Abelian group

$$G = \mathbb{Z}_n \rtimes \mathbb{Z}_3$$

, which is the semi-direct product of additive groups of $\mathbb{Z}_n$ and $\mathbb{Z}_3$, with the following action:

$$\phi: \mathbb{Z}_3 \to Aut(\mathbb{Z}_n)$$

$$\phi(a)(x) = (a+1)x$$

where $n = p_1^{\alpha_1} \cdots p_l^{\alpha_l}$ and $p_i > 3$. $p_i$ are the prime factors of the integer number $n$, and $\alpha_i$ are the corresponding powers, e.g. where $24 = 2^3 \times 3$ then $n = 24$, $p_1 = 2$, $p_2 = 3$, $\alpha_1 = 3$ and $\alpha_2 = 1$. It is clear that the action $\phi$ is a homomorphism and $\phi(0) = Id_{Z_n}$, where $Id$ is the identity function that maps everything to itself, i.e., $Id_{Z_n}: x \mapsto x$ for all $x \in Z_n$. The operation of the group is as follows:

$$(n_1, r_1) \cdot (n_2, r_2) = (n_1 + \phi(r_1)(n_2), r_1 + r_2)$$

By this definition, *G* is a non-Abelian group, i.e. $(n_1, r_1) \cdot (n_2, r_2) \neq (n_2, r_2) \cdot (n_1, r_1)$.

Generating the public key $k_{public}$ and the private key $k_{private}$ at step 304 comprises choosing a number *n* (where $n = p_1^{\alpha_1} \cdots p_l^{\alpha_l}$) and choosing a random divisor of *n*, namely $m = p_i^{\alpha_i}$. By Sylow Theorem a subgroup *H* of order *m* exists, wherein *H* is a subgroup of *G* and *m* is a random divisor of *n*.

At step 304 the number *n*, divisor m and/or subgroup *H* is chosen by the quantum currency generator to be the public key $k_{public}$ (i.e. $k_{public} = (G, n, m)$ in examples). The public key $k_{public}$ may be shared publicly with third parties wishing to perform a verification procedure on a currency state |€⟩, for example by publishing the public key $k_{public}$ in a ledger.

At step 304 the group *G* and/or action $\phi$ is chosen by the quantum currency generator to be the private key $k_{private}$ (i.e. $k_{private} = (H, \phi)$ in examples). The private key $k_{private}$ may be kept secret (i.e. not publicly shared) by the quantum currency generator.

At step 306 the method 300 comprises generating, by the quantum currency generator, a currency state |€⟩. The currency state |€⟩ is a quantum state that is representative of an amount of a quantum currency. In examples, the currency state |€⟩ is generated, by the quantum currency generator, using the public key $k_{public}$ and the private key $k_{private}$ generated at step 302.

Generating the currency state at step 306 comprises generating, by the quantum currency generator, an initial quantum state $|\psi_{Initial}\rangle$, wherein the initial quantum state corresponds to a superposition of the elements of *G*:

$$|\psi_{Initial}\rangle = \frac{1}{\sqrt{|G|}} \sum_{\{g \in G\}} |g\rangle$$

Next, the quantum currency generator generates a serial number. The serial number function is the function *f*: *G* → {0,1}* that is constant on the cosets of *H* and disjoint on the different cosets, i.e., *f(g)* = *f(s)* iff $g \in s \cdot H$. The quantum currency generator needs to apply the action $\phi$, which is a part of the private key $k_{private}$, to construct *f* because constructing *f* requires consideration of $g \in s \cdot H$, where here s · *H* is the semi-product multiplication s with *H*, which is dependent on the function $\phi$. The serial number is then applied to all elements of the initial quantum state, to generate an intermediate quantum state $|\psi_{Intermediate}\rangle$:

$$|\psi_{Intermediate}\rangle = \frac{1}{\sqrt{|G|}} \sum_{\{g \in G\}} |g\rangle |f(g)\rangle$$

Next, the quantum currency generator generates the currency state |€⟩ by measuring and collapsing the intermediate quantum state (the measurement is just on the second register):

$$|€\rangle = \frac{1}{\sqrt{|H|}} \sum_{\{g \in s \cdot H\}} |g\rangle$$

In optional embodiments, the quantum currency generator generates the currency state |€⟩ by measuring and collapsing the intermediate quantum state and subsequently performing a Quantum Fourier Transform on the result, i.e. |€⟩ = QFT(|$\psi_3$⟩), where

$$|\psi_3\rangle = \frac{1}{\sqrt{|H|}} \sum_{\{g \in s \cdot H\}} |g\rangle$$

In such examples, the quantum currency state |€⟩ is hidden by a QFT. Performing an inverse QFT on |€⟩, will not recover |$\psi_3$⟩, but rather some periodic structure on the measurement that can be used to verify the quantum currency state without revealing the subgroup *H*.

Use of the quantum state |€⟩ to embody currency is beneficial because the currency state cannot be copied, i.e. the no-cloning theorem prevents a copy of the quantum state |€⟩ being produced by an actor having access to a physical system which stores quantum state |€⟩. Furthermore, both of the public key $k_{public}$ and the private key $k_{private}$ are required to generate the currency state |€⟩. Since the private key $k_{private}$ is kept secret (i.e. not publicly shared) by the quantum currency generator, only the quantum currency generator is able to validly create the currency state $|\text{€}\rangle$ using the public key $k_{public}$ and the private key $k_{private}$.

At step 308 the method 300 comprises generating a serial number for the currency state $|\text{€}\rangle$. The serial number is a unique serial number corresponding to the generated currency state $|\text{€}\rangle$. In some examples, the public key will be generated using the serial number without revealing information about the serial number.

At step 310 the method 300 comprises sending the currency state $|\text{€}\rangle$ and the serial number to the user. In particular, the quantum currency generator sends the currency state $|\text{€}\rangle$ and the serial number to a user device associated with the user. The user device may be the computing system 100b shown in figure 2. Sending the currency state $|\text{€}\rangle$ to the user device involves sending instructions to the user device, wherein the instructions allow the user device to store the currency state $|\text{€}\rangle$ in a physical system (e.g. quantum memory unit 144 of figure 1). For short range communication technology used for transferring the quantum currency state, 405 nm laser pulses are used to transfer the quantum currency state between devices. The devices that can store the quantum currency state may be referred to as "quantum cards" having quantum memory to store the quantum state.

As will be explained in further detail below with respect to step 406 of the method 400, once the currency state $|\text{€}\rangle$ and the serial number have been received by the user device (e.g. computing system 100b shown in figure 2), the currency state $|\text{€}\rangle$ may be written to a quantum memory unit (e.g. quantum memory unit 144 of figure 1), and the serial number (represented by numeral 105 in figure 1) may be written to a classical memory unit (e.g. memory unit 104 of figure 1). Once written, the currency state $|\text{€}\rangle$ and serial number are stored by the user device and may be used in transactions or accessed by e.g. a quantum currency verifier for verification of the currency state $|\text{€}\rangle$.

At step 312 the method 300 comprises updating, by the quantum currency generator, a ledger to store a representation of the generated currency state. The representation may be a digital representation of the generated currency state, and may include e.g. an identifier of generated currency state (e.g. the serial number). The ledger may be stored locally at the quantum currency generator (e.g. computing system 100a), in a third party computing system 204 which may be a merchant computing system or a ledger computing system and/or in cloud storage.

At step 314 the method 300 comprises publishing, by the quantum currency generator, the public key $k_{public}$. The public key $k_{public}$ may be published in the ledger updated at step 312. For example, the quantum currency generator may write the public key in the ledger in an unencrypted form. Since both of the public key $k_{public}$ and the private key $k_{private}$ are required to generate the currency state $|\text{€}\rangle$, it is not possible for a malicious actor to generate a valid currency state $|\text{€}\rangle$ using only the information on the ledger i.e. just the public key $k_{public}$.

The present method for generating a quantum currency 300 is secure because, by the no-cloning theorem, a counterfeiter cannot make another copy of the currency state $|\text{€}\rangle$. Therefore, the currency state stored at the user device cannot be forged. To reproduce a verifiable currency state $|\text{€}\rangle$, the counterfeiter would need to make a correct random guess about the private key $k_{private}$. For knowing the size of $H$, the counterfeiter needs to factor out $n$, and this is only possible using a quantum computer by Schor's algorithm. Even if the group $G$ has only one subgroup of this order m, reconstructing $H$ needs a knowledge of action $\phi$. In particular, reconstructing $H$ requires a knowledge of the binary operation of the group which is defined by $\phi$, because a subgroup is a subset of the group with the same action of the supergroup that is closed under that operation inherited from the original group and also is closed under inverse operation.

Receiving and storing a quantum currency

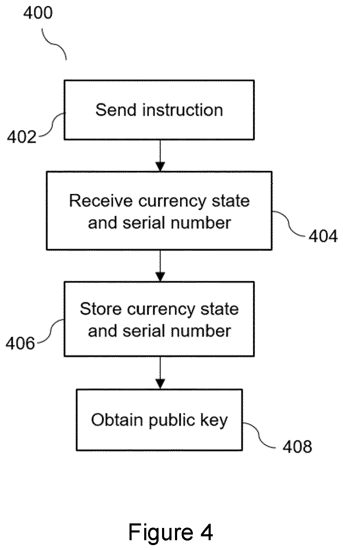

Figure 4 shows a flow diagram of a method 400 for enabling use of a quantum currency in transactions, such as offline transactions, in accordance with an aspect of the present disclosure. In particular, the method 400 is a method for receiving a quantum currency that can be verified as legitimate by a quantum currency verifier. The method 400 may be carried out at a user device, for example the computing system 100b shown in figure 2, which may be similar to the computing system 100 shown in figure 1.

At step 402 the method 400 comprises sending, by a user, an instruction to a quantum currency generator. The instruction may be sent from a user device (e.g. computing system 100b shown in figure 2) via network 202 and corresponds to a request for an amount of a quantum currency. By sending the instruction, a classical currency is offered to a quantum currency generator (e.g. computing system 100a shown in figure 2), in exchange for a quantum currency. As noted above with respect to step 302 of method 300, the classical currency may be any non-quantum currency, such as a traditional currency or crypto currency. In examples, the user may deposit a traditional currency (such as coins, notes) with the quantum currency generator, or may use their user device to send the traditional currency to the quantum currency generator via a digital transaction (using online banking, a cryptocurrency exchange etc.). In examples, the user device may be the computing system 100b shown in figure 2.

As noted above, the classical currency received from the user (or user device) will correspond to an amount of the quantum currency, according to e.g. an exchange rate. Once the quantum currency generator has received the classical currency from the user (or user device), the quantum currency generator proceeds to generate the quantum currency for transmission to, and storage at, the user device. In this way, the quantum currency generator and user or user device exchange classical currency for quantum currency, enabling quantum currency transactions to be carried out by the user.

At step 404 the method 400 comprises receiving the currency state $|€\rangle$ and the serial number from the quantum currency generator. In particular, a user device associated with the user receives the currency state $|€\rangle$ and the serial number from the quantum currency generator. The user device may be the computing system 100b shown in figure 2. Receiving the currency state $|€\rangle$ from the quantum currency generator involves receiving instructions from the quantum currency generator, wherein the instructions allow the user device to store the currency state $|€\rangle$ in a physical system (e.g. in quantum memory unit 144 of figure 1). The user device can hold the quantum currency state for a short period of time until it is verified. In some embodiments, transfer of the quantum currency state can comprise transferring instructions and/or configuration parameters for regenerating the quantum state. For short range communication technology used for transferring the quantum currency state, 405 nm laser pulses are used to transfer the quantum currency state between devices.

Receiving the serial number from the quantum currency generator may involve receiving the serial number directly from the quantum currency generator, or may involve obtaining the serial number from the ledger outlined above with respect to step 312 of method 300.

At step 406 the method 400 comprises storing the currency state $|€\rangle$ and the serial number at the user device. In examples, once the currency state $|€\rangle$ and the serial number have been received by the user device (e.g. computing system 100b shown in figure 2) from the quantum currency generator (e.g. computing system 100a shown in figure 2), the currency state $|€\rangle$ is written to a memory of a physical system of the user device, and the serial number is also written to a memory of a physical system of the user device. The currency state $|€\rangle$ (represented by numeral 145 in figure 1) may be written to a quantum memory unit (e.g. quantum memory unit 144 of figure 1), and the serial number (represented by numeral 105 in figure 1) may be written to a classical memory unit (e.g. memory unit 104 of figure 1). The quantum memory unit comprises a quantum system (e.g. a plurality of qubits) capable of storing the currency state $|€\rangle$. Once written, the currency state $|€\rangle$ and serial number are stored by the user device and may be used in transactions or accessed by e.g. a quantum currency verifier for verification of the currency state $|€\rangle$.

At optional step 408 the method 400 comprises obtaining, by the user device, the public key $k_{public}$. As noted above with respect to step 314 of method 300, the public key $k_{public}$ may be published in a ledger, e.g. in an unencrypted form, and the user device may obtain the public key by inspecting the ledger. Alternatively, the user device may obtain the public key directly from the quantum currency generator. Once obtained, the user device may store the public key in e.g. classical memory (e.g. memory unit 104).

As will be appreciated, some steps of the method 400 may be carried out immediately before, immediately after and/or at the same time as the steps of the method 300. For example, step 402 may be carried out immediately before step 302 and step 404 may be carried out immediately after step 310.

Offline transactions using a quantum currency

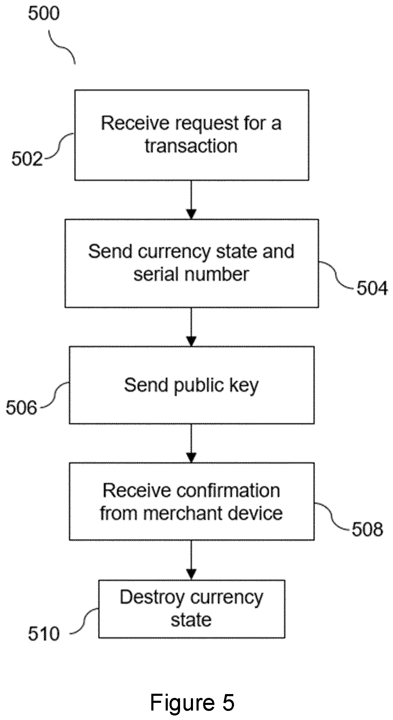

Figure 5 shows a flow diagram of a method 500 for enabling use of a quantum currency in transactions, such as offline transactions, in accordance with an aspect of the present disclosure. In particular, the method 500 is a method for sending a quantum currency that can be verified as legitimate by a quantum currency verifier. The method 500 may be carried out at a user device, for example the computing system 100b shown in figure 2, which may be similar to the computing system 100 shown in figure 1.

At step 502 the method 500 comprises receiving a request for a transaction. In particular, a request for a transaction may be received by a user device (e.g. computing system 100b shown in figure 2) from a merchant device (e.g. computing system 100c shown in figure 2). In this example, the terms 'user device' and 'merchant device' are simply labels denoting the devices which send and receive funds, respectively. In examples, either of the devices 100b and 100c may be considered as the user device and merchant device, depending on which device sends/receives funds.

The request for a transaction received by the user device at step 502 may take the form of a command, and may include an amount of quantum currency (e.g. a number of units of quantum currency requested, such as one unit of quantum currency). The transaction may be a monetary transaction involving the quantum currency. In examples, the user may wish to carry out a transaction i.e. pay an amount of quantum currency (defined as a number of units of quantum currency) to the merchant, for example in exchange for some goods and/or services.

At step 504 the method 500 comprises sending the currency state $|€\rangle$ and the serial number to the merchant. In particular, the user device sends the currency state $|€\rangle$ and the serial number to a merchant device associated with the merchant. This transaction may be offline i.e. carried out while one or both of the user device and the merchant device are not connected to the quantum currency generator via a network. The user device and merchant device may be the computing systems 100b, 100c shown in figure 2, respectively. Sending the currency state $|€\rangle$ to the merchant device involves sending instructions to the merchant device via a suitable communication channel (e.g. using 405 nm laser pulses to transfer the quantum currency state between devices), wherein the instructions allow the merchant device to store the currency state $|€\rangle$ in a physical system (e.g. quantum memory unit 144 of figure 1). The merchant device can regenerate the quantum state from the configuration received from the user device. Note that while the no-cloning theorem predicts that it is not possible to make a copy of an unknown quantum state, knowing the configuration used to generate the quantum state allows the quantum state to be reproduced on another device.

At optional step 506 the method 500 comprises sending the public key $k_{public}$ from the user device to the merchant device, allowing the merchant device to verify the currency state $|€\rangle$. In alternatives, the merchant device may be configured to obtain the public key $k_{public}$ from e.g. the ledger described above or directly from the quantum currency generator.

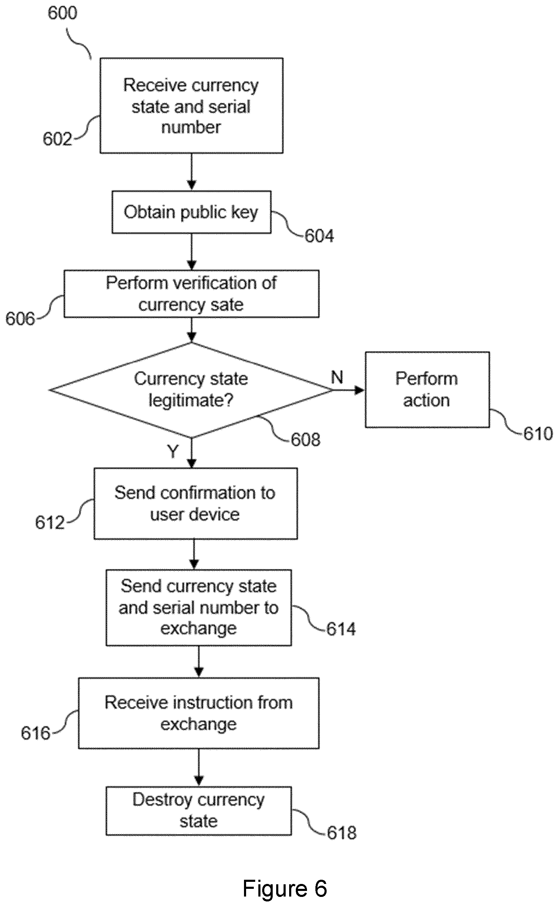

At step 508 the method 500 comprises receiving a confirmation from the merchant device. In particular, the user device receives a confirmation message from the merchant device confirming that the merchant device accepts the currency state $|€\rangle$ as legitimate. To determine that the currency state $|€\rangle$ is legitimate, the merchant device may carry out a verification procedure as described below with respect to method 600 shown in figure 6.

At step 510 the method 500 comprises destroying the currency state $|€\rangle$ at the user device. Destroying the currency state may comprise causing the physical system which stores the currency state $|€\rangle$ to enter its ground state. For example, the quantum system of the quantum memory unit 144 of the user device may be caused to enter its ground state. This will effectively 'wipe' the currency state from the physical system of the user device. Where the quantum system is a collection of qubits, destroying the currency state may comprise causing each qubit to enter its ground state. After step 510, the currency state $|€\rangle$ is no longer stored on the user device and cannot be used in any further transactions by the user.

As will be appreciated, the method 500 may be carried out immediately after the method 300 and/or method 400 has been completed.

Exchanging a quantum currency for classical currency

Figure 6 shows a flow diagram of a method 600 for enabling use of a quantum currency in transactions, such as offline transactions, in accordance with an aspect of the present disclosure. In particular, the method 600 is a method for exchanging a legitimate quantum currency for goods/services and/or classical currency. The method 600 may be carried out at a merchant device, for example the computing system 100c shown in figure 2, which may be similar to the computing system 100 shown in figure 1.

At step 602 the method 600 comprises receiving a currency state $|€\rangle$ a serial number from a user device. In particular, a user device (e.g. computing system 100b shown in figure 2) sends the currency state $|€\rangle$ and the serial number to a merchant device (e.g. computing system 100c shown in figure 2). Receiving the currency state $|€\rangle$ from the quantum currency generator involves receiving instructions from the user device, wherein the instructions allow the merchant device to store the currency state $|€\rangle$ in a physical system (e.g. in quantum memory unit 144 of figure 1). The merchant device can hold the quantum currency state for a short period of time until it is verified. In some embodiments, transfer of the quantum currency state can comprise transferring instructions and/or configuration parameters for regenerating the quantum state. For short range communication technology used for transferring the quantum currency state, 405 nm laser pulses are used to transfer the quantum currency state between devices.

Receiving the serial number from the quantum currency generator may involve receiving the serial number directly from the user device, or may involve obtaining the serial number from the ledger outlined above with respect to step 312 of method 300.

At step 604 the method 600 comprises obtaining, by the merchant device, the public key $k_{public}$. As noted above with respect to step 314 of method 300, the public key $k_{public}$ may be published in a ledger, e.g. in an unencrypted form, and the merchant device may obtain the public key by inspecting the ledger. Alternatively, the merchant device may obtain the public key $k_{public}$ directly from the quantum currency generator.

At step 606 the method 600 comprises performing a verification of the currency state $|€\rangle$. In particular, step 606 comprises calculating, by the quantum currency verifier, a verification result $v$, wherein the verification result $v$ is calculated according to a verification procedure *Ver* based on the quantum state $|€\rangle$ and the public key $k_{public}$ i.e. $v = Ver(k_{public}, |€\rangle)$. The verification result $v$ indicates whether the currency state $|€\rangle$ corresponds to a quantum state generated and/or written by the quantum currency generator. In other words, the verification result $v$ indicates whether the currency state $|€\rangle$ is legitimate in the sense of being generated by the quantum currency generator using the public key $k_{public}$ and the private key $k_{private}$.

The verification result $v$ may take one of a pair of values (e.g. '0' and '1', 'Accept' and 'Deny', or 'Legitimate' and 'Invalid'), wherein the first value (e.g. '0', 'Accept' or 'Legitimate') indicates that the currency state $|€\rangle$ has been generated by the quantum currency generator, and the second value (e.g. '1', 'Deny' or 'Invalid') indicates that the currency state $|€\rangle$ is has not been generated by the quantum currency generator and/or has been tampered with, etc.

Calculating the verification result $v$ at step 606 comprises performing a Quantum Fourier Transform, QFT, on the currency state $|€\rangle$, comparing the result of the QFT with the public key $k_{public}$ and generating a verification result $v$ based on the comparison, wherein the verification result $v$ indicates whether the currency state $|€\rangle$ is legitimate in the sense of being generated by the quantum currency generator using the public key $k_{public}$ and the private key $k_{private}$.

The quantum currency verifier has access to the currency state $|\text{€}\rangle$ and knows the order of the subgroup $H$ from the public key $k_{public}$. At step 406 the quantum currency verifier performs a QFT on the currency state $|\text{€}\rangle$ without destroying the currency state $|\text{€}\rangle$. The result of the QFT shows a periodicity of $G$ without revealing information about $H$, since the function $f$ was periodic with respect to the subgroup $H$.

The QFT is performed on the non-Abelian group and the irreducible representation of non-Abelian groups are in the matrix form. We consider the representation of the form $\rho: G \to U(V)$ where $\rho$ is a function from the group $G$ to the set of all unitary operations $T: V \to V$, $V$ is a finite dimentional Hilbert space, $U(V)$ is the set of unitary operators on the finite dimensional complex Hilbert space. Each member of $U(V)$ is associated with a quantum gate, and every Quantum gate can be represented by a unitary operation or tensor product of unitary operations. So, the representation here are based on the quantum gates. The Fourier transform of the functions $f: G \to \mathbb{C}^*$ is of the following form:

$$\hat{f}(\rho) = \int_G f(g)\,\rho(g)dg$$

Where $dg$ is the Haar measure (a translation invariant measure) on $G$. Here $f(g)$ is a complex number and $\rho(g)$ is a unitary matrix. Computing the Fourier transform in this context reveals periodicity in the character space (i.e. the periodicity of $f$ which is based on the specific subgroup $H$) when restricted to the class functions, i.e. the functions that are constants on the conjugate classes. So, the verification procedure $Ver(k_{public}, |\text{€}\rangle)$ can provide a verification result $v$ without destroying the currency state $|\text{€}\rangle$.

The scheme used by the quantum currency generator to generate currency state $|\text{€}\rangle$ has completeness error $\varepsilon > 0$, if $Ver(k_{public}, |\text{€}\rangle) = Accept$ with probability at least $1 - \varepsilon$, and has a soundness error $\delta > 0$, if any quantum circuit C that tries to map $q$ valid banknotes $|\text{€}_1\rangle, \cdots, |\text{€}_q\rangle$ to $r = poly(n)$ alleged banknotes $|c_1\rangle, \cdots, |c_r\rangle$, which are entangled, such that:

$$\boldsymbol{Pr}\big[\text{Count}\big(\text{k}_{public}, C\big(k_{public}, |\text{€}_1\rangle, \cdots, |\text{€}_q\rangle\big) \geq q\big] \leq \delta$$

where Count is a quantum circuit that counts the indices that pass the verification test. The scheme is secure if its completeness error is less that $\frac{1}{3}$ and its soundness error is negligible.

The present means of verifying that a quantum state is a legitimate currency state generated by a quantum currency generator is advantageous because applying a QFT to the currency state $|\text{€}\rangle$ reveals only the periodicity of the structure of the subgroup, not the entire structure of the subgroup, without destroying the currency state $|\text{€}\rangle$. Therefore the integrity of the currency state $|\text{€}\rangle$ is maintained even after the verification procedure has been performed.

At step 608 the method 600 comprises determining whether the currency state is legitimate. The determination is made by inspecting the verification result v calculated in step 606.

If the verification result v calculated in step 606 indicates that the currency state $|\text{€}\rangle$ is not legitimate (in which case the 'N' branch from step 608 is followed), then the method 600 proceeds to step 610 where an action is performed by the merchant device.

Where the verification result v calculated in step 606 indicates that the currency state $|\text{€}\rangle$ is not legitimate then this may indicate that the currency state $|\text{€}\rangle$ is being used by a malicious actor, and/or that the currency state $|\text{€}\rangle$ has been tampered with or is a copy or a forgery. To ensure that the currency state $|\text{€}\rangle$ cannot be used by said malicious actor, the action performed at step 610 may comprise blocking a transaction and/or modifying the currency state $|\text{€}\rangle$. Modifying the currency state $|\text{€}\rangle$ may comprise measuring and/or destroying the currency state $|\text{€}\rangle$. For example, destroying the currency state $|\text{€}\rangle$ may comprise causing the physical system which stores the currency state $|\text{€}\rangle$ to enter its ground state. This will effectively 'wipe' the currency state $|\text{€}\rangle$ from the physical system. Where the quantum system is a collection of qubits, destroying the currency state $|\text{€}\rangle$ may comprise causing each qubit to enter its ground state.

If the verification result v calculated in step 606 indicates that the currency state $|\text{€}\rangle$ is legitimate (in which case the 'Y' branch from step 608 is followed), then the method 600 proceeds to step 612 where the merchant device sends a confirmation to the user device. In particular, the merchant device sends a confirmation message to the user device confirming that the merchant device accepts the currency state $|\text{€}\rangle$ as legitimate.

At step 614 the method 600 comprises sending the currency state $|\text{€}\rangle$ and the serial number to an exchange. In particular, the merchant device sends the currency state $|\text{€}\rangle$ and the serial number to a device associated with a party which can exchange the currency state $|\text{€}\rangle$ for classical currency. The exchange device can hold the quantum currency state for a short period of time until it is verified. In some embodiments, transfer of the quantum currency state can comprise transferring instructions and/or configuration parameters for regenerating the quantum state. For short range communication technology used for transferring the quantum currency state, 405 nm laser pulses are used to transfer the quantum currency state between devices.

The exchange may be the quantum currency generator which initially issued the quantum currency (e.g. computing system 100a of figure 2) or may be a trusted third party computing system capable of exchanging quantum currency for classical currency. The exchange may perform its own verification of currency state $|€\rangle$, similar to steps 606-610, and be configured only to exchange the exchange the currency state $|€\rangle$ for classical currency when its own verification of currency state $|€\rangle$ indicates that currency state $|€\rangle$ is legitimate.

At step 616 the method 600 comprises receiving classical currency from the exchange (which may be the quantum currency generator or a trusted third-party exchange). As noted above with respect to step 302 of method 300, the classical currency may be any non-quantum currency, such as a traditional currency or crypto currency. In examples, the merchant may receive a traditional currency (such as coins, notes) from the currency exchange, or may use the merchant device to receive the traditional currency via a digital transaction (using online banking, a cryptocurrency exchange etc.). In examples, the merchant device may be the computing system 100c shown in figure 2.

When the exchange sends classical currency at step 616, the exchange may update the ledger. In particular, the ledger may be updated to reflect the changes made to the currency state, and the transaction that has taken place.

At step 618 the method 600 comprises destroying the currency state $|€\rangle$ at the merchant device. Destroying the currency state may comprise causing the physical system which stores the currency state $|€\rangle$ to enter its ground state. For example, the quantum system of the quantum memory unit 144 of the merchant device 100c may be caused to enter its ground state. This will effectively 'wipe' the currency state from the physical system. Where the quantum system is a collection of qubits, destroying the currency state may comprise causing each qubit to enter its ground state. After step 510, the currency state $|€\rangle$ is no longer stored on the merchant device and cannot be used to obtain classical currency from the exchange (e.g. quantum currency generator 100a).

As will be appreciated, the method 600 may be carried out immediately after the method 300 and/or method 400 has been completed, and some steps of the method 600 may be carried out immediately before, immediately after and/or at the same time as the steps of the method 500. For example, step 602 may be carried out immediately after step 504 and step 612 may be carried out immediately before step 508.

<u>Exchanging a quantum currency</u>

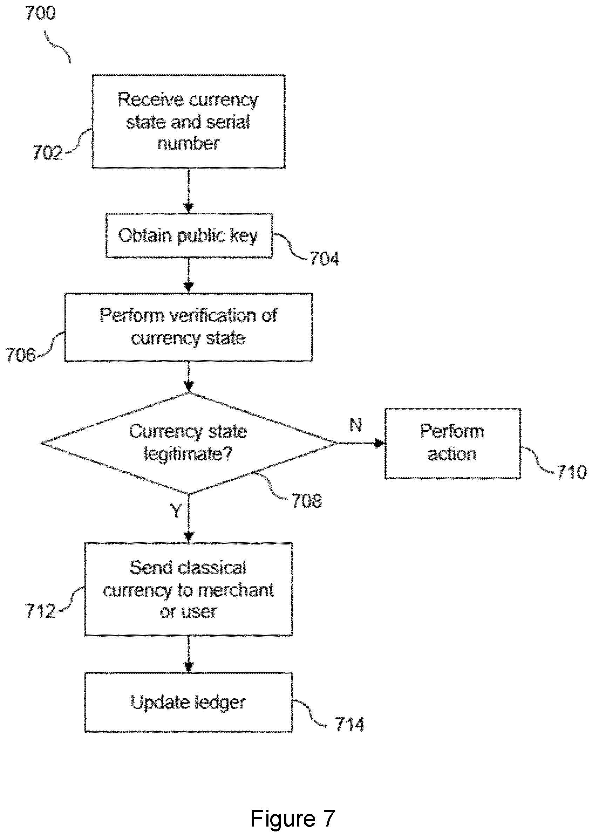

Figure 7 shows a flow diagram of a method for enabling use of a quantum currency in transactions, such as offline transactions, in accordance with an aspect of the present disclosure. In particular, the method 700 is a method for exchanging a quantum currency for a classical currency. The method 700 may be carried out at an exchange, such as the quantum currency generator described above and/or at the OTM computing system 100a shown in figure 2, which may be similar to the computing system 100 shown in figure 1.

At step 702 the method 700 comprises receiving the currency state $|€\rangle$ and the serial number from the user device. In particular, a user device associated with the user sends the currency state $|€\rangle$ and the serial number to the merchant device. The user device and merchant device may be the computing systems 100b, 100c shown in figure 2, respectively. Receiving the currency state $|€\rangle$ from the quantum currency generator involves receiving instructions from the quantum currency generator, wherein the instructions allow the user device to store the currency state $|€\rangle$ in a physical system (e.g. in quantum memory unit 144 of figure 1). The merchant device can hold the quantum currency state for a short period of time until it is verified. In some embodiments, transfer of the quantum currency state can comprise transferring instructions and/or configuration parameters for regenerating the quantum state. For short range communication technology used for transferring the quantum currency state, 405 nm laser pulses are used to transfer the quantum currency state between devices.

Receiving the serial number from the quantum currency generator may involve receiving the serial number directly from the quantum currency generator, or may involve obtaining the serial number from the ledger outlined above with respect to step 312 of method 300.

At step 704 the method 700 comprises obtaining, by the merchant device, the public key $k_{public}$. As noted above with respect to step 314 of method 300, the public key $k_{public}$ may be published in a ledger, e.g. in an unencrypted form, and the merchant device may obtain the public key by inspecting the ledger. Alternatively, the merchant device may obtain the public key $k_{public}$ directly from the quantum currency generator.

At step 706 the method 700 comprises performing a verification of the currency state $|€\rangle$ in a manner similar to that described above with respect to step 606 of method 600.

At step 708 the method 700 comprises determining whether the currency state is legitimate in a manner similar to that described above with respect to step 608 of method 600.

At step 710 the method 700 comprises performing an action in a manner similar to that described above with respect to step 610 of method 600.

At step 712 the method 700 comprises receiving classical currency from the exchange (which may be the quantum currency generator or a trusted third-party exchange). As noted above with respect to step 302 of method 300, the classical currency may be any non-quantum currency, such as a traditional currency or crypto currency. In examples, the merchant may receive a traditional currency (such as coins, notes) from the currency exchange, or may use the merchant device to receive the traditional currency via a digital transaction (using online banking, a cryptocurrency exchange etc.). In examples, the merchant device may be the computing system 100c shown in figure 2.

At step 712 the method 700 comprises updating the ledger. In particular, the ledger may be updated to reflect the changes made to the currency state, and the transaction that has taken place.

As will be appreciated, some steps of the method 700 may be carried out immediately before, immediately after and/or at the same time as the steps of the method 600. For example, step 702 may be carried out immediately after step 614 and step 712 may be carried out immediately before step 616.

Smart contracts using a quantum currency

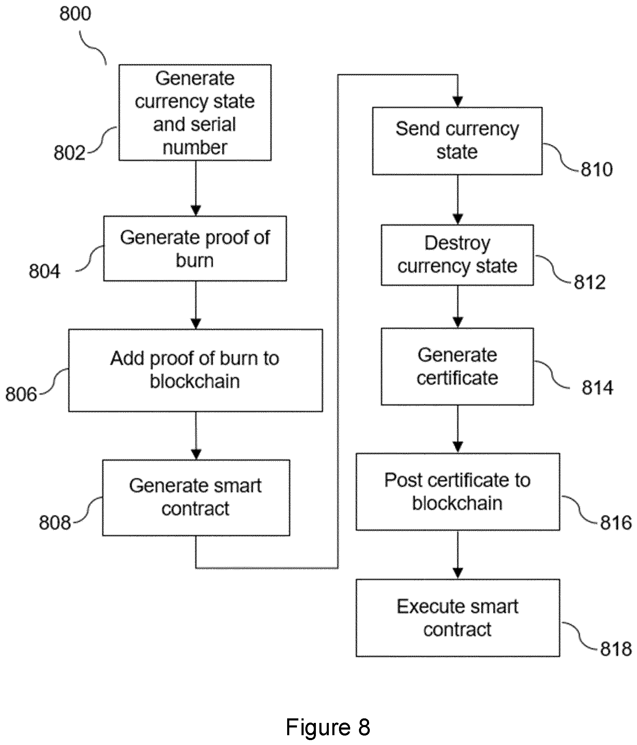

Figure 8 shows a flow diagram of a method 800 for enabling use of a quantum currency in a smart contract, in accordance with an aspect of the present disclosure. The method 800 may be carried out by the devices of the system 200 shown in figure 2. The method 800 may enable the implementation of quantum currency in transactions which rely on decentralised internet protocols such as web 3.0.

At step 802 the method 800 comprises generating a currency state $|€\rangle$ and a serial number s, for example in the manner explained above with respect to steps 302 to 308 of method 300. Step 802 may be carried out by a quantum currency generator, such as the OTM 100a shown in figure 2. In an example, at step 802 the OTM 100a may receive classical currency (e.g. Bitcoin) from a user (Alice) associated with computing device 100b, and the OTM 100a may generate a currency state $|€\rangle$ which corresponds to the amount of classical currency received, as well as generating a serial number and public/private keys etc.

At step 804 the method 800 comprises generating a proof of burn. The proof of burn is a certificate which specifies the serial number s generated in step 802. The proof of burn is proof that a legitimate currency state $|€\rangle$ having a serial number s has been created, for example by the OTM 100a. Step 804 may be carried out by the quantum currency generator, such as the OTM 100a.

At step 806 the method 800 comprises adding the proof of burn to a ledger or blockchain. For example, the ledger or blockchain may be the ledger discussed above with respect to step 312 of method 300. Step 806 may be carried out by a quantum currency generator, such as the OTM 100a.

At step 808 the method 800 comprises generating a smart contract. For example, the smart contract may be a smart contract which specifies an action to be carried out when a predetermined condition is satisfied. For example, the smart contract may specify that a certain amount of a classical currency (e.g. an amount of cryptocurrency corresponding to the amount of classical currency received in step 802) is to be transferred to any party which destroys the quantum state having serial number s generated in step 802. Step 808 may be carried out by the quantum currency generator, such as OTM 100a.

At step 810 the method 800 comprises sending the currency state $|€\rangle$ and serial number to the user device (Alice/computing device 100b) i.e. the user device that sent the classical currency to the OTM 100a in step 802. The currency state $|€\rangle$ and serial number s may be sent to the user device in the manner outlined above with respect to step 310 of method 300. The user (Alice/computing device 100b) may subsequently transfer the currency state $|€\rangle$ and serial number s to another user (e.g. Bob, a merchant user associated with computing device 100c) as payment for goods and/or services in the manner outlined above with respect to step 504 of method 500. Any number of such off-chain transactions can be carried out.

At step 812 the method 800 comprises destroying the quantum state. For example, the currency state may be destroyed by Bob (at computing device 100c) in the manner outlined above with respect to step 510 of method 500.

At step 814 the method 800 comprises generating a certificate c. The certificate c is proof that the currency state $|€\rangle$ has been destroyed. For example, Bob (computing device 100c) may generate certificate c using the serial number s according to a particular cryptographic scheme known in the art.

At step 816 the method 800 comprises posting the certificate c to the ledger or blockchain. For example, Bob (computing device 100c) may post the certificate c to the ledger discussed above with respect to step 312 of method 300.

At step 816 the method 800 comprises executing the smart contract generated in step 808. The smart contract generated in step 808 may stipulate that once the proof of burn has been posted to the blockchain, the classical currency (e.g. cryptocurrency/Bitcoin) originally received by the OTM at step 802 may be sent to the user that posted the certificate to the blockchain (in this case Bob, associated with computing device 100c). For example, a wallet address may be sent from the OTM 100a to the computing device 100c.

The method 800 allows a quantum currency state to be transferred from an original requesting party (e.g. Alice) to other parties (e.g. Bob), mimicking the actual use of money in real-life situation. Critically, the ledger or blockchain is updated only when the banknote is created/destroyed. All intermediate transaction steps (e.g. transfers between Alice, Bob and others) can happen "off-chain", ensuring privacy.

Example of generating a quantum currency state using real data

The following is a simple example of generating a quantum currency state using real data.

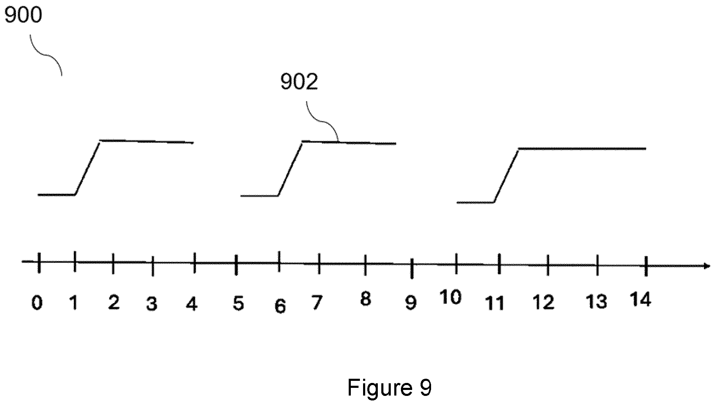

Let group $G = Z_{15}$, subgroup $H = \{0,5,10\}$ and $s = 0$. We choose the function $f:Z_{15} \rightarrow \{1,2\}$ so that $f(0) = f(1) = 1$, $f(2) = f(3) = f(4) = 2$, $f(5) = f(6) = 1$, $f(7) = f(8) = f(9) = 2$, etc., as shown in figure 7. The function $f$ (denoted 902 in figure 9) is periodic, i.e., $f(x + 5) = f(x)$. In this example, $k_{public} = (Z_{15}, 15, 3)$ and $k_{private} = H$.

The quantum currency state can be prepared in three steps:

1. First an initial quantum state $|\psi_1\rangle$ is prepared as the superposition of all elements of $G$, i.e.,

$$|\psi_1\rangle = \frac{1}{\sqrt{15}} \left( |0\rangle + |1\rangle + \cdots + |14\rangle \right)$$

2. Next, an intermediate quantum state $|\psi_2\rangle$ is prepared by applying the function $f$ to the initial quantum state $|\psi_1\rangle$, i.e.,

$$|\psi_2\rangle = \frac{1}{\sqrt{15}} \left( |0\rangle|1\rangle + |1\rangle|1\rangle + \cdots + |14\rangle|2\rangle \right)$$

3. Next, the quantum state $|\psi_3\rangle$ is generated by measuring the second register, the result being:

$$|\psi_3\rangle = \frac{1}{\sqrt{3}} \left( |0\rangle + |5\rangle + |10\rangle \right)$$

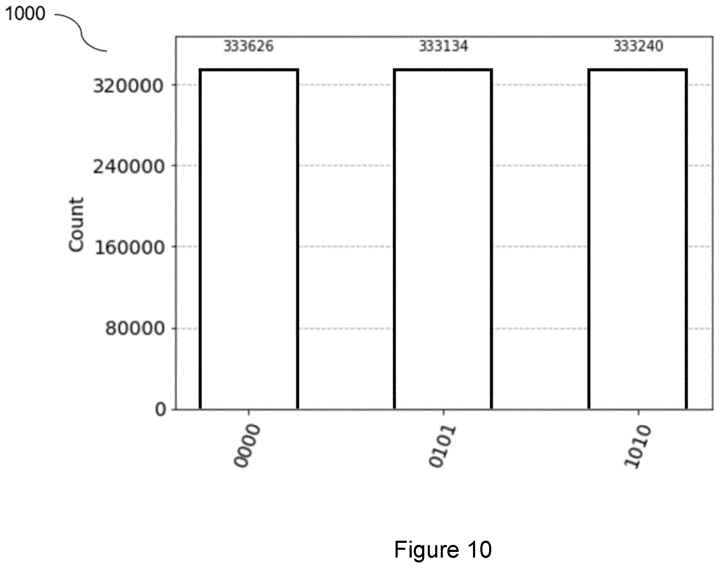

The result of measuring this quantum state $|\psi_3\rangle$ one million times is shown in the histogram 1000 of figure 10. The results shown in figure 10 were produced by the qiskit quantum simulator on 1 million shots. The histogram of figure 10 shows spikes on the binary representations of 0, 5 and 10.

4. We may apply a Quantum Fourier Transform on $|\psi_3\rangle$ to obtain the quantum currency state:

$$|\psi_3\rangle \rightarrow QFT|\psi_3\rangle$$

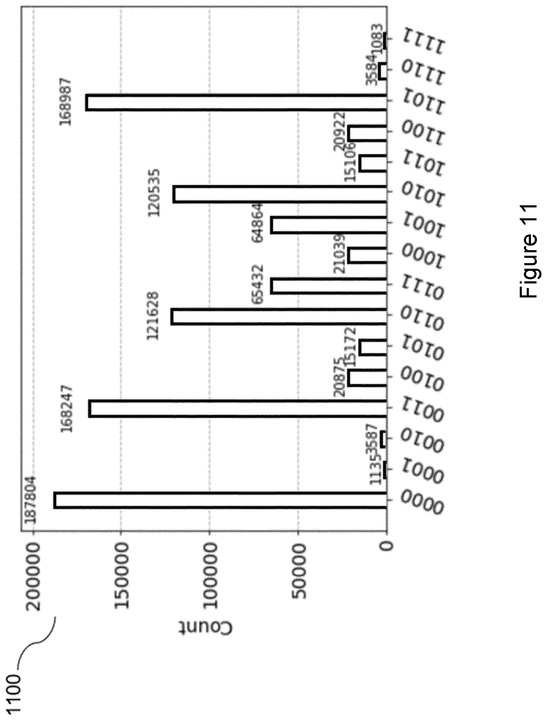

This state $QFT|\psi_3\rangle$ may be used as a quantum currency state $|\textrm{€}\rangle$ (i.e. $|\textrm{€}\rangle = QFT(|\psi_3\rangle)$). In these examples, $|\textrm{€}\rangle$ is hidden by a QFT. Performing an inverse QFT on $|\textrm{€}\rangle$, will not recover $|\psi_3\rangle$, but rather some periodic structure on the measurement that can be used to verify the quantum currency state but not reveal the actual subgroup $H$. The result of measuring the state $QFT|\psi_3\rangle$ one million times is shown in the histogram 1100 of figure 11. The results shown in figure 11 were produced by the qiskit quantum simulator on 1 million shots.

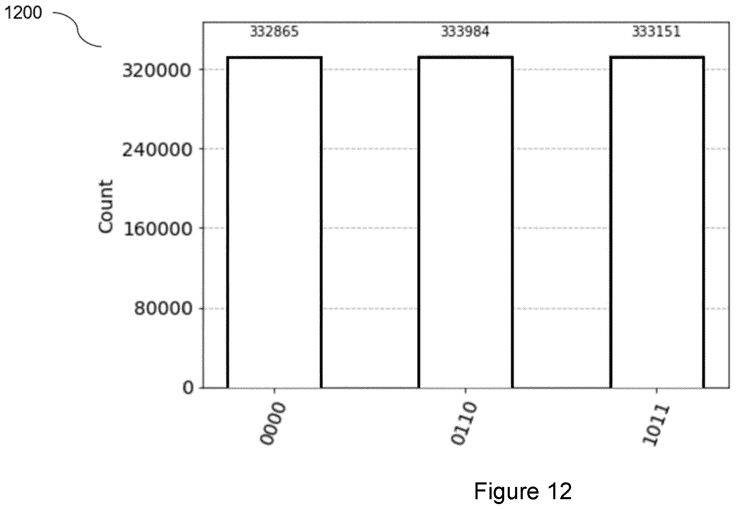

For the verification of the currency state $QFT|\psi_3\rangle$, we again apply QFT on this state and the perform the measurement one million times. The result of such measurements is shown in the histogram 1200 of figure 12. The results shown in figure 12 were produced by the qiskit quantum simulator on 1 million shots. Note that there is some periodicity in the results of this histogram but not on 0, 5 and 10, but rather on 0, 6, and 11. This allows us to verify the quantum currency state without revealing the initial ground state. Note that in this example, the private key $H = \{0,5,10\}$ was not revealed during the verification process.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method for enabling use of a quantum currency in transactions, the method comprising:

   receiving an instruction from a user device, wherein the instruction corresponds to a request for an amount of a quantum currency;
   generating a quantum currency state, wherein the quantum currency state is a quantum state that is representative of the amount of a quantum currency and wherein the quantum currency state is generated using a private key and a public key;
   generating a serial number, wherein the serial number corresponds to the quantum currency state;
   sending the quantum currency state and the serial number to a user device such that the quantum currency state and the serial number can be stored in memory of the user device; and
   publishing the public key, wherein the quantum currency state can be verified using the public key.

2. The method of claim 1, wherein the method further comprises:
   creating a public key and a private key, wherein the public key comprises a number $n$, a divisor $m$ and/or a subgroup $H$ of order $m$, and wherein the private key comprises a group $G$ and/or an action $\phi$, wherein $H$ is a subgroup of $G$ and wherein $m$ is a random divisor of $n$.

3. The method of any preceding claim, wherein publishing the public key comprises:
   storing the public key in a ledger.

4. The method of any preceding claim, wherein generating the quantum currency state comprises:

generating an initial quantum state;
generating an intermediate quantum state; and
generating the quantum currency state by measuring and collapsing the intermediate quantum state.

5. The method of claim 4, wherein generating the intermediate quantum state comprises:
applying the serial number to the initial quantum state to generate the intermediate quantum state.

6. The method of any preceding claim, wherein the method further comprises:
storing a representation of the generated quantum currency state in a ledger.

7. A method for enabling use of a quantum currency in transactions, the method comprising:

receiving, by a merchant device, a quantum currency state and a serial number from a user device;
storing the quantum currency state and the serial number;
obtaining a public key; and
performing a verification of the quantum currency state, wherein performing a verification of the quantum currency state calculating a verification result using the quantum currency state and the public key, and wherein the verification result indicates whether the quantum currency state corresponds to a legitimate quantum state generated by a quantum currency generator.

8. The method of claim 7, wherein calculating the verification result comprises:

performing a Quantum Fourier Transform, QFT, on the quantum currency state; and
generating a verification result based on a comparison of the QFT with the public key.

9. The method of claim 7 or claim 8, wherein the method further comprises:
in response to the verification result indicating that the quantum currency state corresponds to a legitimate quantum state generated by the quantum currency generator, sending a confirmation to the user device.

10. The method of claim 7 or claim 8, wherein the method further comprises:
in response to the verification result indicating that the quantum currency state does not correspond to a legitimate quantum state generated by the quantum currency generator, performing an action.

11. The method of claim 10, wherein performing an action comprises:
destroying or erasing the quantum currency state from the user device and/or merchant device.

12. The method of claim 11, wherein destroying or erasing the quantum currency state from the user device and/or merchant device comprises collapsing the quantum currency state.

13. The method of claim 12, wherein the memory of the user device comprises a physical system, wherein the physical system comprises a plurality of qubits, and wherein collapsing the quantum currency state comprises:
causing each qubit of the plurality of qubits to be in a ground state.

14. A system for enabling use of a quantum currency in transactions, the system comprising:

a quantum currency generator;
a user device comprising a memory configured to store a quantum currency state; and
a merchant device comprising a memory configured to store a quantum currency state,
wherein the system is configured to carry out the method of any preceding claim.

100

130

102

104    105

106

108

110

156

146    148

150    152

142

154

144    145

140

Figure 1

Figure 2

300

302 — Receive instruction

Create a private key and a
public key — 304

306 — Generate
currency state

Generate serial
number — 308

310 — Send currency state
and serial number

Update ledger — 312

Publish public key
314 —

Figure 3

400

Send instruction

402

Receive currency state
and serial number

404

Store currency state
and serial number

406

Obtain public key

408

Figure 4

500

Receive request for a
transaction

502

Send currency state and
serial number

504

Send public key

506

Receive confirmation
from merchant device

508

Destroy currency
state

510

Figure 5

Figure 6

700

Receive currency
state and serial
number
702

Obtain public key
704

Perform verification of
currency state
706

Currency state
legitimate?
708

N → Perform
action
710

Y

Send classical
currency to merchant
or user
712

Update ledger
714

Figure 7

Figure 8

Figure 9

1000

| | 333626 | | 333134 | | 333240 |

Count

320000

240000

160000

80000

0

0000    0101    1010

Figure 10

Figure 11

EP 4 749 551 A1

Figure 12

| | Europäisches Patentamt European Patent Office Office européen des brevets | **EUROPEAN SEARCH REPORT** | **Application Number** EP 24 21 4519 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 516 461 A (UNIV CHINA THREE GORGES CTGU) 19 October 2021 (2021-10-19) * See electronic translation Google; paragraphs [0033], [0049] - [0060] * ----- | 1-14 | INV. G06Q20/06 |
| A | US 2006/129486 A1 (OHKUMA KENJI [JP] ET AL) 15 June 2006 (2006-06-15) * paragraphs [0006], [0008], [0043] - [0047], [0056], [0058], [0079], [0085] * ----- | 1-14 | |
| A | JONATHAN JOGENFORS: "Quantum Bitcoin: An Anonymous and Distributed Currency Secured by the No-Cloning Theorem of Quantum Mechanics", ARXIV.ORG, CORNELL UNIVERSITY LIBRARY, 201 OLIN LIBRARY CORNELL UNIVERSITY ITHACA, NY 14853, 5 April 2016 (2016-04-05), XP080693591, * Paragraph 4.3 * ----- | 1-14 | |
| A | RADIAN ROY ET AL: "Semi-quantum Money", JOURNAL OF CRYPTOLOGY, SPRINGER US, NEW YORK, vol. 35, no. 2, 25 January 2022 (2022-01-25), XP037675116, ISSN: 0933-2790, DOI: 10.1007/S00145-021-09418-8 [retrieved on 2022-01-25] * page 1 - page 2 * ----- -/-- | 1-14 | TECHNICAL FIELDS SEARCHED (IPC) G06Q H04L |

The present search report has been drawn up for all claims

| Place of search | Date of completion of the search | Examiner |
|---|---|---|
| The Hague | 22 May 2025 | Wolles, Bart |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 21 4519

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KAROL HORODECKI ET AL: "Semi-Device Independent Quantum Money", ARXIV.ORG, CORNELL UNIVERSITY LIBRARY, 201 OLIN LIBRARY CORNELL UNIVERSITY ITHACA, NY 14853, 26 November 2018 (2018-11-26), XP080939089, * Page 2 column 2 last two paragraphs * | 1-14 | |
| A | HART MONTGOMERY ET AL: "Quantum Money from Class Group Actions on Elliptic Curves", IACR, INTERNATIONAL ASSOCIATION FOR CRYPTOLOGIC RESEARCH , vol. 20241007:152358 7 October 2024 (2024-10-07), pages 1-37, XP061090783, Retrieved from the Internet: URL:https://eprint.iacr.org/archive/2024/1585/1728314638.pdf [retrieved on 2024-10-08] * Paragraph 2.2 * | 1-14 | TECHNICAL FIELDS SEARCHED (IPC) |

The present search report has been drawn up for all claims

| Place of search | Date of completion of the search | Examiner |
|---|---|---|
| The Hague | 22 May 2025 | Wolles, Bart |

## ANNEX TO THE EUROPEAN SEARCH REPORT
## ON EUROPEAN PATENT APPLICATION NO.

EP 24 21 4519

This annex lists the patent family members relating to the patent documents cited in  the above-mentioned European search report.
The members are as contained in the European Patent Office EDP file on
The European Patent Office is in no way liable for these particulars which are merely given for the purpose of information.

22-05-2025

| Patent document cited in search report | | Publication date | Patent family member(s) | | Publication date |
|---|---|---|---|---|---|
| CN 113516461 | A | 19-10-2021 | NONE | | |
| US 2006129486 | A1 | 15-06-2006 | CN | 1820278 A | 16-08-2006 |
| | | | EP | 1683101 A2 | 26-07-2006 |
| | | | JP | 2006048153 A | 16-02-2006 |
| | | | US | 2006129486 A1 | 15-06-2006 |
| | | | WO | 2006011679 A2 | 02-02-2006 |

EPO FORM P0459

For more details about this annex : see Official Journal of the European Patent Office, No. 12/82